## Europäisches Patentamt

## European Patent Office

## Office européen des brevets

(19)

(11) Veröffentlichungsnummer: **0 136 572**
**B1**

(12) **EUROPÄISCHE PATENTSCHRIFT**

(45) Veröffentlichungstag der Patentschrift:
**18.01.89**

(51) Int. Cl.⁴: **C 08 L 67/06** // (C08L67/06, 51:04)

(21) Anmeldenummer: **84110453.2**

(22) Anmeldetag: **03.09.84**

(54) **Härtbare Polyesterformmassen.**

(30) Priorität: **06.09.83 DE 3332019**

(43) Veröffentlichungstag der Anmeldung:
**10.04.85 Patentblatt 85/15**

(45) Bekanntmachung des Hinweises auf die Patenterteilung:
**18.01.89 Patentblatt 89/3**

(84) Benannte Vertragsstaaten:
**DE FR GB IT NL**

(56) Entgegenhaltungen:
**FR-A- 2 162 678
FR-A- 2 375 292
GB-A- 2 069 510
US-A- 3 882 078
US-A- 3 887 515
US-A- 4 079 024
US-A- 4 100 229
US-A- 4 336 344**

(73) Patentinhaber: **BASF Aktiengesellschaft,
Carl-Bosch-Strasse 38, D-6700 Ludwigshafen (DE)**

(72) Erfinder: **Hesse, Anton, Dr., Peter-Nickel-Strasse 15,
D-6940 Weinhelm (DE)**
Erfinder: **Buensch, Hellmut, Dr., Kreuzweg 17,
D-2000 Norderstedt (DE)**
Erfinder: **Czauderna, Bernhard, Dr., Kapellenweg 34,
D-6945 Hirschberg (DE)**

ACTORUM AG

### Beschreibung

Die Erfindung betrifft härtbare Polyesterformmassen, die zur Erhöhung der Zähigkeit spezielle Pfropfpolymerisate enthalten. Unter «härtbare Polyester» sollen im folgenden sowohl ungesättigte Polyesterharze (UP-Harze) als auch endständig ungesättigte Vinylesterharze (VE-Harze) verstanden werden.

Formteile aus gehärteten faserverstärkten Polyesterharzen sind insbesondere dann spröde, wenn die Polyestermatrix aufgrund ihres chemischen Aufbaus eine hohe Wärmeformbeständigkeit aufweist. Bei Stossbeanspruchung des Formteils kann dies zu Rissbildung in der Matrix führen, noch bevor eine deutliche Schädigung der Verstärkungsfasern optisch zu erkennen ist. Matrixschädigungen durch Rissbildung können aber auch bereits während der Härtung eintreten, wenn diese zur Erzielung kurzer Zykluszeiten verhältnismässig schnell durchgeführt wird. Eine solche Rissbildung hat zur Folge, dass Flüssigkeiten, die mit dem Formteil in Berührung kommen, in die Risse eindiffundieren und die Fasern schädigen können.

Zur Verbesserung der Zähigkeit und Verringerung der Rissanfälligkeit bei Schlageinwirkung von Polyesterformteilen, wurde verschiedentlich vorgeschlagen, den Polyesterformmassen Kautschuke zuzusetzen. Nach der DE-A 2 014 774 sollen zu hitzehärtbaren Polyesterharzen 5 bis 15% eines niedrigviskosen Polydienkautschuks zugesetzt werden. Da Kautschuke mit ungesättigten Polyestern nicht mischbar sind, werden sie gewöhnlich als styrolische Lösung in den styrolischen Polyester-Lösungen emulgiert. Da diese Emulsionen jedoch nicht stabil sind und sich in kurzer Zeit entmischen, ist die Handhabung solcher Systeme schwierig. Sie haben sich daher auf solchen Anwendungsgebieten, bei denen flüssige Polyesterharze verabreicht werden, z.B. Handlaminieren, Wickelverfahren, Strangziehen, nicht durchsetzen können. Entsprechende Formteile haben nämlich wegen der schlechten Kautschukverteilung ein niedriges mechanisches Eigenschaftsniveau und eine unregelmässige Oberflächenstruktur.

Günstigere Voraussetzungen liegen bei solchen Anwendungen vor, bei denen Polyesterharze zusammen mit hohen Füllstoffanteilen und insbesondere in eingedickter Form verarbeitet werden, z.B. als flächiges Halbzeug (SMC). Dort kann es aber während der Eindickung der Formmasse zu einem Ausschwitzen der Kautschukphase kommen. Dies führt dann zu erhöhter Klebrigkeit der SMC-Formmasse, zu Belagbildung am Presswerkzeug und zu matten Flecken an der Formteiloberfläche.

In der US-A 3 882 078 sind Polyesterharze beschrieben, die als elastifizierenden Zusatz ein Blockcopolymeres der Struktur ABA mit einem langen Polydienblock B und kurzen Polystyrolblöcken A enthalten. Solche Harzmischungen sind bestenfalls einige Stunden stabil, dann entmischen sie sich und es bilden sich zwei Phasen.

In der DE-A 2 402 739 wird deshalb empfohlen, die Verträglichkeit von Polyesterharzen und sogenannten Nieder-Profil-Additiven (als welche z.B. auch Polydien-Kautschuke verwendet werden können) durch Zusatz von Stabilisatoren auf Basis von anionisch hergestellten Styrol/Ethylenoxid- oder Butadien/Ethylenoxid-Blockcopolymeren zu verbessern. Die Herstellung dieser Blockcopolymeren ist jedoch schwierig, derartige Stabilisatoren werden daher in der Praxis nicht eingesetzt; ausserdem werden durch die Stabilisatoren andere Eigenschaften der Polyesterformmassen, z.B. die Chemikalienbeständigkeit beeinträchtigt. Ähnliches gilt auch für die Formmassen nach der US-A 4 336 344, wo die Verträglichkeit von Polyesterharzen und elastomeren Zusätzen durch Ester aus carboxylgruppenterminierten Dienpolymeren und Polyoxyalkylenen verbessert wird.

In der DE-A 2 534 039 sind Formmassen beschrieben aus Vinylesterharzen, einem «Nieder-Profil-Additiv» (z.B. Polydien-Kautschuken) und Füllstoffen, die als viskositätsverminderndes Mittel ein Copolymer aus dem Maleinsäurehalbester eines Polyethylenglykols mit Molekulargewicht von 140 bis 6000 und einem alkenylaromatischen Monomeren enthalten sollen. Es hat sich gezeigt, dass Polyalkylenethermischpolymerisate auf Basis eines derart niedermolekularen Polyethylenglykols nicht in der Lage sind, die Stabilität von Emulsionen von Polydien-Kautschuken in styrolischen Polyesterlösungen in ausreichendem Masse zu verbessern.

In der EP-A 79 227 sind ungesättigte Polyesterharze beschrieben, die durch Zusatz niedermolekularer Reaktionsprodukte aus einem funktionelle Gruppen tragenden Butadien/Acrylnitril-Copolymeren und einem Epoxidharz elastomermodifiziert sind. Der Zusatz der beschriebenen niedermolekularen Kautschuke erniedrigt jedoch sehr stark die Wärmeformbeständigkeit von ausgehärteten Formteilen.

Der Erfindung lag nun die Aufgabe zugrunde, Polyesterharze zu entwickeln, die zu Formteilen mit erhöhter Schlagzähigkeit ausgehärtet werden können, welche die beschriebenen Nachteile nicht aufweisen. Insbesondere sollten die Kautschukpartikel in der Polyestermatrix gleichmässig und fein verteilt sein, so dass die Formteile eine hohe Schlagzähigkeit, geringe Rissanfälligkeit, gute mechanische Eigenschaften und darüber hinaus eine gleichmässige, glatte Oberfläche aufweisen. Ein besonderes Ziel der Erfindung war es, niedrigviskose Formmassen aus Polyesterharzen und elastifizierenden Kautschuken bereitzustellen, die über längere Zeit stabil sind und zur Herstellung von füllstoff-freien oder füllstoff-armen glasfaserverstärkten Polyester-Teilen geeignet sind.

Es wurde gefunden, dass diese Aufgabe gelöst werden kann, wenn man als Kautschuke mit selbstemulgierenden Eigenschaften spezielle Pfropfpolymerisate P einsetzt.

Gegenstand der Erfindung sind demzufolge härtbare Polyesterformmassen, enthaltend ein Gemisch aus

I. einem ethylenisch ungesättigten Polyester oder einem endständig ungesättigten Vinylesterharz,

II. ethylenisch ungesättigten, mit I copolymerisierbaren Monomeren,

III. 6 bis 25 Gew.%, bezogen auf I + II, eines Pfropfpolymerisats P, bei welchem auf

A. 5 bis 95 Gew.% eines kautschukartigen Polymerisates mit einer Glastemperatur unter 0 °C

B. 95 bis 5 Gew.% eines olefinische Doppelbindungen enthaltenden Polyaddukts, Polykondensats oder Acrylpolymerisats, welches ein Molekulargewicht zwischen 1000 und 100 000 hat und eine Glastemperatur über 0 °C aufweist, sowie gegebenenfalls

C. 0 bis 90 Gew.% Vinylmonomere gepfropft sind, wobei sich die Prozentzahlen zu 100 addieren,

IV. 5 bis 300 Gew.%, bezogen auf I + II, faserförmiger Verstärkungsmittel, sowie gegebenenfalls

V. üblichen Initiatoren, Polymerisationsbeschleunigern, Inhibitoren, Gleitmitteln, inerten Lösungsmitteln, Füllstoffen, Verdickungsmitteln und schrumpfmindernden Zusätzen.

Die anspruchsgemässen Polyesterformmassen enthalten folgende Bestandteile:

I. Als ethylenisch ungesättigte Polyester eignen sich die üblichen Polykondensationsprodukte aus mehrwertigen, insbesondere zweiwertigen Carbonsäuren und deren veresterbaren Derivaten, insbesondere Anhydriden, die mit mehrwertigen, insbesondere zweiwertigen Alkoholen esterartig verknüpft sind, und gegebenenfalls zusätzlich Reste einwertiger Carbonsäuren und/oder Reste einwertiger Alkohole und/oder Reste von Hydroxycarbonsäuren enthalten, wobei zumindest ein Teil der Reste über ethylenisch ungesättigte copolymerisierbare Gruppen verfügen muss.

Als mehrwertige, insbesondere zweiwertige, gegebenenfalls ungesättigte Alkohole eignen sich die üblichen, insbesondere acyclische Gruppen, cyclische Gruppen als auch beide Arten von Gruppen aufweisenden Alkandiole und Oxalkandiole, wie z.B.
Ethylenglykol, Propylenglykol-1,2, Propandiol-1,3, Butylenglykol-1,3, Butandiol-1,4, Hexandiol-1,6, 2,-Dimethylpropandiol-1,3, Diethylglykol, Triethylenglykol, Polyethylenglykol, Dipropylenglykol, Cyclohexandiol-1,2, 2,2-Bis-(hydroxy-cyclohexyl)-propan, Trimethylolpropanmonoallylether oder Butandiol-1,4.
Ferner können ein-, drei- oder höherwertige Alkohole, wie z.B.
Ethylenhexanol, Fettalkohole, Benzylalkohole, 1,2-Di-(allyloxy)-propanol-(3), Glycerin, Pentaerythrit oder Trimethylolpropan in untergeordneten Mengen mitverwendet werden.

Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäure bzw. deren Derivate sind zweibasische olefinisch ungesättigte, vorzugsweise α,β-olefinisch ungesättigte Carbonsäuren, wie z.B. Maleinsäure, Fumarsäure, Chlormaleinsäure, Itaconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z.B. Bernsteinsäure, Glutarsäure, Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei und höherbasische Carbonsäuren, wie z.B. Ethylhexansäure, Fettsäuren, Methacrylsäure, Acrylsäure, Propionsäure, 1,2,4,5-Benzoltetracarbonsäure. Vorzugsweise verwendet werden Maleinsäure bzw. deren Anhydrid und Fumarsäure.

Auch ungesättigte Polyester, die unter Verwendung von Dicyclopentadien hergestellt wurden, lassen sich vorteilhaft einsetzen.

Gemischte ungesättigte Polyester, darunter auch solche, die in den Vinylmonomeren (II) nur beschränkt löslich sind und leicht kristallisieren, können ebenfalls vorteilhaft eingesetzt werden. Solche leicht kristallisierende ungesättigte Polyester können z.B. aus Fumarsäure, Adipinsäure, Terephthalsäure, Ethylenglykol, Butandiol-1,4, Hexandiol-1,6 und Neopentylglykol aufgebaut sein.

Die ungesättigten Polyester besitzen Säurezahlen von 5 bis 200, vorzugsweise von 20 bis 85 und mittlere Molekulargewichte von ungefähr 800 bis 6000, vorzugsweise von etwa 1000 bis 4000.

Die amorphen und gegebenenfalls kristallisierbaren ungesättigten Polyester werden im allgemeinen durch Schmelzkondensation oder Kondensation unter azeotropen Bedingungen aus ihren Ausgangskomponenten nach kontinuierlichen oder diskontinuierlichen Verfahren hergestellt.

Geeignete endständig ungesättigte Vinylesterharze im Sinne der Erfindung besitzen die charakteristische Gruppierung –CO–OCH₂CHOH–CH₂O– und enthalten endständige polymerisierbare ungesättigte Gruppen. Die Vinylesterharze werden hergestellt durch Umsetzung von etwa stöchiometrischen Mengen eines Polyepoxidharzes und einer ungesättigten Monocarbonsäure, beispielsweise Methacrylsäure.

Vinylesterharze der genannten Art werden z.B. beschrieben in der US-PS 3 367 992, wonach Dicarbonsäure-Halbester von Hydroxyacrylaten oder -methacrylaten mit Polyepoxidharzen umgesetzt werden. Gemäss US-PS 3 066 112 und 3 179 623 werden Vinylesterharze aus Monocarbonsäuren, z.B. Acryl- und Methacrylsäure, erhalten; hier wird auch eine alternative Herstellungsmethode genannt, wonach ein Glycidylmethacrylat oder -acrylat mit dem Natriumsalz eines zweiwertigen Phenols, z.B. Bisphenol A, zur Reaktion gebracht wird. Vinylesterharze auf Basis von Epoxy-Novolac-Harzen sind in der US-PS 3 301 743 beschrieben. In der US-PS 3 256 226 werden Vinylesterharze offenbart, bei denen das Molekulargewicht des Polyepoxids vor der Reaktion mit der Acrylsäure durch Umsetzung von 2 Mol Polyepoxid mit 1 Mol einer Dicarbonsäure gesteigert wird. In Betracht kommen ferner modifizierte Vinylesterharze, beispielsweise solche gemäss DE-OS 2 534 039 (äquivalent zu US-PS 3 947 422) die Halbestergruppen enthalten und durch Reaktion der zweiten Hydroxylgruppe der Gruppierung –CO–OCH$_2$.CHOH–CH$_2$O– mit einem Dicarbonsäureanhydrid, z.B. dem Anhydrid der Maleinsäure, Citraconsäure, Phthalsäure, Tetrabromphthalsäure u.a. erhalten werden.

Die erfindungsgemässen härtbaren Polyesterformmassen enthalten im allgemeinen 20 bis 90, vorzugsweise 30 bis 80 Gew.% an Komponente I, bezogen auf das Gesamtgewicht der Komponenten I + II.

II. Als copolymerisierbare, ethylenisch ungesättigte monomere Verbindungen kommen die üblicherweise zum Herstellen ungesättigter Polyesterformmassen verwendeten Allyl- und vorzugsweise Vinylverbindungen in Frage, Vinylaromaten, wie Styrol, substituierte Styrole, wie p-Chlorstyrol oder Vinyltoluol, Ester der Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide, Allylester, wie Diallylphthalat, und Vinylester wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, α-Methylstyrol, Chlorstyrol, Vinyltoluol, Divinylbenzol und Diallylphthalat. Die Komponente II ist in den Polyesterformmassen im allgemeinen in einer Menge von 10 bis 80, vorzugsweise von 20 bis 70 Gew.%, bezogen auf das Gesamtgewicht der Komponente I + II enthalten.

III. Die erfindungsgemässen härtbaren Polyesterformmassen enthalten 6 bis 25 Gew.%, vorzugsweise 10 bis 20 Gew.%, bezogen auf I + II, eines selbstemulgierenden, kammartig aufgebauten Pfropfpolymerisats P.

Als Kautschuke (A) zur Herstellung des Pfropfpolymerisats P kommen handelsübliche Kautschuke infrage, wie sie z.B. in «The Synthetic Rubber Manual» 8th Edition, 1980, des International Institute of Synthetic Rubber Producers Inc. aufgeführt sind, ferner Naturkautschuk. Als Verbindungsklassen seien genannt Polydien-, Polychloropren-, Polybutyl-, Polynitril-, Ethylen-Olefin-Dien-(EPDM)-Kautschuke sowie statistische Copolymerisate aus Dienen und copolymerisierbaren Vinylmonomeren wie SBR-Kautschuk, Polyacrylatkautschuk, Ethylen-Vinylestercopolymerisate. Bevorzugt werden gegebenenfalls funktionelle Gruppen enthaltende Polydiene, Polydien-Blöcke enthaltende Blockpolymere, besonders mit aus Styrol – und/oder Acrylnitril – sowie aus Butadien und/oder Isopren aufgebauten Blöcken, weiterhin SBR, EPDM-Kautschuke und Polyacrylate. Besonders bevorzugt werden Polybutadienöle, aber auch hochmolekulare Polybutadiene und Polyisoprene sowie Diene einpolymerisiert enthaltende Polyacrylate und insbesondere Butadien/Acrylnitril-Blockcopolymere, die mit funktionellen Gruppen terminiert sind. In der Regel werden Kautschuke mit Glastemperaturen unter 0 °C verwendet, bevorzugt solche, deren Glastemperatur unter – 10 °C liegen. Dies gilt bei den Blockpolymerisaten für die jeweiligen Polydien-Blöcke.

Das Molekulargewicht geeigneter Kautschuke (A) kann in weiten Grenzen variiert werden, zu hohe Molekulargewichte führen jedoch zu entsprechend hohen Lösungsviskositäten bzw. niedrigen Konzentrationen bei der Verarbeitung. Bevorzugt werden Kautschuke mit Molekulargewichten von 1000 bis 500 000, besonders bevorzugt solche, deren Molekulargewichte 5000 bis 300 000 betragen. Bei der Verwendung mehrerer Kautschuke werden bevorzugt Gemische aus hoch- und niedermolekularen Kautschuken eingesetzt.

Der Anteil an Kautschuken (A) richtet sich nach dem gewünschten Elastifizierungsgrad und den notwendigen Anteilen an Einsatzstoffen (B) und ggf. (C). Bevorzugt verwendet man bis zu 80 Gew.% (A), bezogen auf die Summe aus (A), (B) und ggf. (C), besonders bevorzugt 25 bis 75 Gew.% (A), speziell 30 bis 70 Gew.% (A).

Als Einsatzstoffe der Gruppe (B) sind olefinische Doppelbindungen enthaltende Polymere mit Molekulargewichten von 1000 bis 100 000, bevorzugt 2000 bis 50 000, besonders bevorzugt 2000 bis 20 000 verwendbar. Zu niedrige Molekulargewichte der Polymeren (B) bringen in der Regel eine ungenügende Wirkung hinsichtlich der Verträglichkeit mit dem jeweiligen Polyesterharz, Molekulargewichte über 100 000 führen häufig zu sehr hohen Viskositäten bei der Verarbeitung.

Die Polymeren (B) sollen bezüglich der Vinylmonomeren (C) eine hinreichend hohe Pfropfaktivität zeigen. Bevorzugt sind Polymere (B) mit einem mittleren Gehalt an olefinischen Doppelbindungen je Polymermolekül von 0,2 bis 2, insbesondere von 0,5 bis 1,3. Optimal ist die Verwendung von Polymeren, die eine olefinische Doppelbindung je Molekül aufweisen, dies ist jedoch nicht notwendig. Liegt der Doppelbindungsgehalt zu hoch, so kann unerwünschte Vernetzung eintreten. Geeignete Polymere (B) können prinzipiell alle Polymeren sein, die den oben genannten Anforderungen genügen und sich in homogener oder heterogener Reaktion mit den Kautschuken (A) und ggf. den Monomeren (C) umsetzen lassen. Dabei ist es in der Regel erwünscht, nicht aber unbedingt erforderlich, dass die Polymeren (B) vollständig umgesetzt werden. Beispiele geeigneter Verbindungsklassen sind Polyester, Polyalkylenoxide, Polyurethane, Polyetherurethane, Polyesterurethane, Polyetheramide, Poly(meth)acrylsäureester und deren Mischpolymerisate mit anderen Vinylmonomeren, Polyolefine, Polyvinylaromaten, Poly(meth)acrylnitril, Polysulfone, Polyethersulfone, Polyvinylester. Bevorzugt werden Polyalkylenoxide, Polyester, Polyurethane, Polyvinylester.

Bevorzugte Polymere (B), die olefinische Doppelbindungen enthalten, können durch Umsetzung gesättigter Polymerer mit olefinisch ungesättigten Reagenzien erhalten werden. So können z.B. Polymere, die Hydroxylgruppen, primäre oder sekundäre Aminogruppen enthalten, mit olefinisch ungesättigten Carbonsäuren wie (Meth)-acrylsäure, Maleinsäure, Fumarsäure oder Crotonsäure bzw. deren Derivaten wie Säurehalogeniden, -anhydriden, -(halb)estern umgesetzt werden. Gegebenenfalls lassen sich H-acide Gruppen enthaltende Polymere auch mit olefinisch ungesättigten Epoxiden wie Glycidylallylether oder -(meth)-acrylat oder olefinisch ungesättigten Isocyanaten zur Reaktion bringen. Eine weitere Möglichkeit besteht darin, H-acide Gruppen enthaltende Polymere mit Diisocyanaten und H-aciden olefinisch ungesättigten Reagenzien umzusetzen. Polymere mit Carboxylgruppen können auch mit zur Addition befähigten Dienen oder olefinisch ungesättigten Alkoholen zur Reaktion gebracht werden.

Es ist jedoch auch möglich, olefinisch ungesättigte Reagenzien direkt bei der Herstellung der Polymeren mitzuverwenden, z.B. olefinisch ungesättigte Carbonsäuren bei der Herstellung von Polyestern oder Polyamiden, olefinisch ungesättigte Alkohole bei der Herstellung von Polyestern, Polyethern, Polyurethanen. Bei der ionischen Polymerisation von Vinylaromaten, (Meth)acrylnitril oder (Meth)acrylsäureestern können olefinisch ungesättigte Reagenzien zum Kettenabbruch verwendet werden, wie Allylbromid, Glycidylallylether oder -(meth)acrylat. Ferner können bei der Polymerisation Kettenabbruchsmittel oder Kettenübertragungsmittel verwendet werden, die reaktive Gruppen aufweisen, welche sich nachträglich mit olefinisch ungesättigten Reagenzien umsetzen lassen.

Die Polymeren (B) sollten mit den ethylenisch ungesättigten Polyestern bzw. Vinylestern verträglich sein. Bei der Herstellung von SMC-Prepregs aus Polyesterharzen werden vorteilhaft Polyalkylenoxide oder Polyester enthaltende Kautschuk-Pfropfpolymerisate verwendet.

Der Anteil an Polymeren (B) in den Kautschuk-Pfropfpolymerisaten richtet sich im wesentlichen danach, wieviel notwendig ist, um eine ausreichende Verträglichkeit mit dem Werkstoff zu erzielen, in der Regel sind unter 5 Gew.% dafür zu wenig. Bevorzugte Kautschuk-Pfropfpolymerisate enthalten 10 bis 60 Gew.% Polymere (B) besonders bevorzugt 15 bis 40 Gew.% (B).

Als Monomere (C) sind prinzipiell alle radikalisch polymerisierbaren Vinyl-Verbindungen, die mindestens eine olefinische Doppelbindung aufweisen, geeignet, wobei der Anteil an mehrfachen olefinisch ungesättigten Monomeren zweckmässig in der Regel unter 10 Gew.%, bezogen auf (C) gehalten wird, um unerwünschte Vernetzung zu vermeiden.

Bevorzugt werden solche Monomere verwendet, die keine funktionellen Gruppen enthalten. Dazu gehören Olefine mit 2 bis 20 C-Atomen, Vinylaromaten mit 8 bis 12 C-Atomen, (Meth)acrylsäureester gradkettiger, verzweigter, cycloaliphatischer und araliphatischer Alkohole mit 1 bis 20 C-Atomen, Vinylester von Carbonsäuren mit 1 bis 20 C-Atomen, (Meth)acrylnitril, Vinyl- und Allylether mit 3 bzw. 4 bis 20 C-Atomen, Malein- oder Furmarsäurediester von Alkoholen mit 1 bis 20 C-Atomen.

In bestimmten Fällen kann es sinnvoll sein, zusätzlich funktionelle Gruppen enthaltende Monomere (C) zu verwenden, deren Anteil unter 30 Gew.%, bezogen auf (C) bleiben sollte. Zu diesen Monomeren gehören z.B. (Meth)acrylamid und deren N-Alkylderivate, N-Vinylamide wie N-Vinylformamid, N-Vinylcaprolactam, N-Vinylpyrrolidon, Hydroxylgruppen enthaltende Monomere wie Hydroxyethyl-, -propyl- oder -butyl(meth)acrylat, Allylalkohol oder Allylether mehr funktioneller Alkohole, olefinisch ungesättigte Carbonsäuren mit 3 bis 6 C-Atomen wie (Meth)acrylsäure, Crotonsäure, Malein- und Fumarsäure sowie deren Halbester, Itaconsäure, basische olefinisch ungesättigte Monomere wie N-Vinylpyridin, Dialkylaminoalkyl(meth)acrylate und -vinyl- oder -allylether.

Bevorzugt werden als Monomere (C) Vinylaromaten insbesondere Styrol, Methylstyrol oder Vinyltoluol sowie (Meth)acrylsäureester von 1 bis 8 C-Atome enthaltenden Alkanolen, speziell Methyl-, Ethyl-, n- und i-Butyl, 2-Ethylhexyl(meth)acrylat, ferner Vinylacetat und -propionat eingesetzt.

Der Anteil der Monomeren (C), bezogen auf die Summe aus (A), (B) und (C) kann in weiten Grenzen variieren, bevorzugt werden mindestens 1 Gew.%, besonders bevorzugt mindestens 5 Gew.% Monomere (C) eingesetzt. Die obere Grenze des Anteils der Monomeren (C) richtet sich im wesentlichen nach der Wahl der Anteile an Kautschuk (A) und Macromeren (B). Bevorzugt enthalten die Kautschuk-Pfropfpolymerisate P bis zu 80 Gew.%, insbesondere 10 bis 60 Gew.% Monomere (C).

Die erfindungsgemässen Kautschuk-Pfropfpolymerisate P können durch Polymerisation der Macromeren (B) und ggf. der Monomeren (C) in Gegenwart des Kautschuks (A) unter Zusatz von in Radikale zerfallenden Verbindungen oder durch energiereiche Strahlung hergestellt werden. Die Polymerisation kann in Emulsion, Suspension oder bevorzugt in Lösung bzw. in nichtwässrigen Dispersionen erfolgen. Es ist jedoch auch möglich, die Polymerisation in Anwesenheit oder Abwesenheit eines inerten Lösungsmittels zu beginnen und als Emulsions- oder Suspensionspolymerisation auszupolymerisieren. Als Lösungsmittel kommen infrage Ketone, z.B. Aceton oder Methylethylketon, Ether wie Tetrahydrofuran, Ethylenglykoldialkylether, Ester wie Ethyl- oder Butylacetat, Alkohole wie Ethanol, Propanol, Butanol, ferner Pyridin, Dimethylformamid oder andere gebräuchliche Lösungsmittel. Bevorzugt verwendet man Kohlenwasserstoffe, z.B. Aromaten wie Toluol, Xylol oder Aliphaten wie Hexan, Cyclohexan, Benzine mit Siedebereichen von 50 bis 200°C. Besonders bevorzugt werden Lösungsmittel, in denen die Kautschuke (A) und die Macromere (B) mit nicht zu hohen Viskositäten löslich sind, mit Siedebereichen von 50 bis 150°C.

Eine weitere bevorzugte Ausführungsform besteht darin, die verwendeten Monomeren (C) als Lösungsmittel zu verwenden und ggf. den Überschuss an derartigen Lösungsmitteln durch Destillation zu entfernen.

Als Starter können die üblichen in Radikale zerfallenden Verbindungen eingesetzt werden, Azoverbindungen wie Azoisobutyronitril, Acylperoxide wie Benzoyl- oder Lauroylperoxid, Alkylperoxide wie t-Butylperoxid, Hydroperoxide wie Cumylhydroperoxid, Perester wie t-Butylperpivalat, -peroctoat, -perneodecanoat oder -perbenzoat bzw. die entsprechenden t-Amylester, Peracetate, Persulfate oder auch Wasserstoffperoxid. Gegebenenfalls kann der Zusatz von Verbindungen, die den Zerfall der Starter beschleunigen (Redoxsystem), nützlich sein.

Die Starter können einzeln oder im Gemisch verwendet werden, bevorzugt werden Gemische von Startern unterschiedlicher Halbwertszeit.

Als Verstärkungsfasern kommen in Frage anorganische oder organische Fasern als Rovings oder flächige, gegebenenfalls daraus gewebte Gebilde, z.B. aus Glas, Kohlenstoff, Asbest, Zellulose und synthetischen organischen Fasern, wie Polycarbonsäureester, Polycarbonate und Polyamide.

Die Verstärkungsfasern können in Mengen von 5 bis 300, vorzugsweise 10 bis 150 Gew.%, bezogen auf die Komponenten I + II verwendet werden.

Übliche Polymerisationsinitiatoren sind Peroxide oder andere in der Wärme Radikale bildende organische Verbindungen z.B. in Mengen von 0,05 bis 5 Gew.%, vorzugsweise von 0,1 bis 3 Gew.%, bezogen auf das Gesamtgewicht der Komponenten I + II. Als Radikale liefernde Initiatoren seien beispielhaft genannt: Benzoylperoxid, tert.-Butylperoctoat, tert.-Butylperbenzoat, Cyclohexanon-peroxid, tert.,-Dibutyl-peroxid und Hydroperoxide, ferner Azoverbindungen, wie Azodiisobutyronitril oder andere organische Verbindungen mit einer labilen Kohlenstoff-Kohlenstoff-Bindung.

Setzt man den peroxid-initiierten Formmassen übliche Polymerisationsbeschleuniger, wie z.B.

Co-, Mn-, Sn- oder Ce-Salze organischer Säuren oder Amine, wie N,N-Dimethylanilin oder N,N-Diethylanilin zu, dann kann die Härtung auch ohne Temperaturerhöhung durchgeführt werden, wenn Hydroperoxide, bzw. Benzoylperoxid zum Einsatz kommen. Bei Verwendung üblicher Lichtinitiatoren, wie z.B. Benzoinether, Benzilketalen oder Acylphosphinverbindungen kann die Härtung durch Bestrahlen mit Licht der Wellenlänge 200 bis 500 nm durchgeführt werden.

Als Inhibitoren kommen die üblichen in Frage, wie z.B. Hydrochinon, 2,6-Dimethylhydrochinon, tert.-Butylbrenzkatechin, p-Benzochinon, Chloranil, 2,6-Dimethylchinon, Nitrobenzole, wie m-Dinitrobenzol, Thiodiphenylamin oder Salze von N-Nitroso-N-cyclohexylhydroxylamin sowie deren Gemische. Die Inhibitoren sind in den Formmassen im allgemein in einer Menge von 0,005 bis 0,2, vorzugsweise 0,01 bis 0,1 Gewichtsprozent, bezogen auf die Komponenten I + II, enthalten.

Als weiterhin gegebenenfalls mitzuverwendende inerte Lösungsmittel kommen Ketone, Ester, Kohlenwasserstoffe in Mengen bis zu 100 Gew.%, bezogen auf I + II, in Frage.

Als Gleitmittel kommen beispielsweise Zink-, Magnesium- und Calciumstearat sowie Polyalkylenetherwachse in Betracht.

Geeignete Füllstoffe sind z.B. übliche feinpulverige oder körnige anorganische Füllstoffe, wie Kreide, Kaolin, Quarzmehl, Dolomit, Schwerspat, Metallpulver, Zement, Talkum, Kieselgur, Holzmehl, Holzspäne, Pigmente und dergleichen. Sie werden in Mengen von 20 bis 200 Gew.%, bezogen auf I + II, eingesetzt.

Als Verdickungsmittel seien beispielsweise Erdalkalioxide, wie Calciumoxid, Calciumhydroxid, Magnesiumhydroxid und vorzugsweise Magnesiumoxid sowie Gemische dieser Oxide bzw. Hydroxide genannt. Diese können auch teilweise durch Zinkoxid ersetzt sein. Auch Polyisocyanate sind in manchen Fällen geeignet. Die Verdickungsmittel können den Formmassen in Mengen von 0,5 bis 5 Gew.%, bezogen auf I + II, zugesetzt werden.

Als gegebenenfalls zusätzlich mitzuverwendende schrumpfmindernde Zusätze kommen beispielsweise thermoplastische Polymere, wie Polystyrol, Polyvinylacetat oder Poly(meth)acrylate z.B. in Mengen von 1 bis zu etwa 30 Gew.%, bezogen auf die Komponenten I + II, in Betracht.

Die erfindungsgemässen Formmassen können in flüssiger und in eingedickter Form verarbeitet werden.

Ein übliches Verfahren zur Herstellung der erfindungsgemässen Formmassen besteht darin, dass eine Lösung von ungesättigten Polyester I in Monomeren II mit einer Lösung des Pfropfpolymerisats P in Monomeren II vermischt und durch kräftiges Rühren emulgiert wird. Während der Emulsionsherstellung sind übliche Inhibitoren in der Mischung vorhanden. Polymerisationsinitiatoren und -beschleuniger können entweder schon in der Polyesterlösung enthalten sein oder erst zu der Emulsion zugegeben werden. Zu der Emulsion werden dann gegebenenfalls noch Füllstoffe, Lösungsmittel, Thixotropiermittel und Gleitmittel zugesetzt; mit diesem flüssigen Harzgemisch werden dann die Verstärkungsfasern E getränkt. Die fertige Formmasse kann dann nach verschiedenen, bekannten Verfahren verarbeitet werden, wie z.B. in der Monographie von P.H. Selden, Glasfaserverstärkte Kunststoffe, Springer-Verlag 1967, Seiten 506 bis 615 beschrieben. Darüber hinaus kann die Formmasse auch nach dem Vakuumtiefziehverfahren verarbeitet werden. Die Aushärtung der Formmasse kann ebenfalls auf übliche Weise, z.B. durch Warmhärtung bei erhöhter Temperatur, Kalthärtung bei Zusatz von Beschleunigern oder durch Bestrahlung mit UV-Licht bei Zusatz von Lichtinitiatoren erfolgen. Die erhaltenen Formteile zeichnen sich durch gute mechanische Eigenschaften, insbesondere durch eine hohe Schlagzähigkeit und geringe Rissanfälligkeit, sowie durch eine gleichmässige, glatte Oberfläche aus.

Eingedickte Formmassen weisen einen hohen Füllstoffgehalt auf. Durch Zusatz üblicher Verdickungsmittel kann ihre Viskosität so stark erhöht werden, dass klebfreie, aber noch verformbare Halbzeuge (SMC) entstehen, die dann auf übliche Weise ausgehärtet werden können. Bei Zusatz spezieller Thermoplasten erhält man SMC-Halbzeug, das zu schrumpfarmen Formteilen mit glatter Oberfläche aushärtet.

Die in den Beispielen genannten Teile und Prozente beziehen sich auf das Gewicht.

Herstellung der ungesättigten Polyesterharze

H1. Ein ungesättigter Polyester mit Säurezahl 31 wurde hergestellt durch Schmelzkondensation von Maleinsäureanhydrid und Propylenglykol-1,2 im Molverhältnis 1:1. Er wurde 65%ig in Styrol gelöst und mit 120 ppm Hydrochinon stabilisiert.

H2. Ein ungesättigter Polyester mit Säurezahl 35 wurde hergestellt durch Schmelzkondensation von Maleinsäureanhydrid, Propylenglykol-1,2 und Dipropylenglykol im Molverhältnis 1:0,76:0,33. Er wurde 70%ig in Styrol gelöst und mit 100 ppm Hydrochinon stabilisiert.

H3. Ein ungesättigter Vinylester wurde hergestellt durch Umsetzung von 1000 g eines Bisphenol A-diglycidylethers (Epikote 828 der Shell AG) mit 313 g Bisphenol A bei 130 bis 140 °C in 1,5 Stunden und dann mit 472 g Methacrylsäure in Gegenwart von 10 g Dibenzyldimethylammoniumchlorid und 1 g Hydrochinonmonomethylether bei 120 bis 130 °C in 2 bis 3 Stunden bis zu einem Umsatz von 95%.

H4. Es wurde wie bei H3 gearbeitet, jedoch wurde das Harz nach der Reaktion mit Methacrylsäure mit 570 g Maleinsäureanhydrid bei 90 bis 100 °C 3 bis 4 Stunden gerührt, wobei ein säuregruppenhaltiger, eindickfähiger ungesättigter Vinylester entsteht.

H5. Ein Vinylester auf Novolakbasis wurde hergestellt durch Umsetzung von 1000 g eines epoxidierten Novolaks (EPOSID 5038 der Duroplast Chemie) mit 430 g Methacrylsäure in Gegenwart von 10 g Dibenzyldimethylammoniumchlorid und 1 g Hydrochinonmonomethylether bei 90 bis 100 °C. Nach 5 bis 6 Stunden wurde mit 520 g Maleinsäureanhydrid versetzt und 3 bis 4 Stunden bei 90 bis 100 °C gerührt.

Herstellung der Pfropfpolymerisate

Präpolymer 1

Mit Allylalkohol als Starter und 0,1 Teilen KOH als Katalysator wurde ein Blockpolyether aus 16 Teilen Propylenoxid und 84 Teilen Ethylenoxid mit Zahlenmittelmolekulargewicht 5560 und im Mittel 1,0 olefinischen Doppelbindungen je Molekül hergestellt.

Präpolymer 2

In einem Rundkolben wurden 504 Teile eines Blockpolyethers aus 81% Propylenoxid und 19% Ethylenoxid mit der OH-Zahl 28 und einem Gehalt an primären Hydroxylgruppen von 84% mit 0,5 Teilen Dibutylzinndilaurat auf 50 °C erwärmt und mit 15,7 Teilen 4,4'-Diphenylmethandiisocyanat während 15 Minuten versetzt. Anschliessend liess man 2 Stunden bei 80 °C nachrühren. 160 Teile des so erhaltenen Polyetherurethans wurden 0,5 bis 1 Stunde mit 1,3 Teilen Maleinsäureanhydrid und 1,4 Teilen Bernsteinsäureanhydrid bei 120 °C umgesetzt. Das Produkt weist ein Zahlmittelmolekulargewicht von 6400 und einen mittleren Gehalt an olefinischen Doppelbindungen von 0,5 je Molekül auf.

Präpolymer 3

80 Teile eines Polyethers aus 200 Mol Ethylenoxid je Mol Ethylenglykol wurden mit 40 Teilen Toluol, 0,8 Teilen Maleinsäureanhydrid und 0,88 Teilen Bernsteinsäureanhydrid 1 Stunde lang auf 120 °C erwärmt. Das Produkt hatte ein Zahlenmittelmolekulargewicht von 8040 und im Mittel 0,8 olefinische Doppelbindung je Molekül.

Kautschuk-Pfropfpolymerisat P 1

300 Teile eines Butadien-Acrylnitril-Copolymeren mit 80% Butadien und Molekulargewicht 2200, 100 Teile des Präpolymeren 1, 100 Teile p-Vinyltoluol, 60 Teile Methylmethacrylat, 40 Teile Acrylsäure und 0,4 Teile Irganox 1076 (Antioxidans der Fa. Ciba Geigy) wurden in einem Kolben unter Stickstoff auf 60 °C erwärmt, mit 0,4 Teilen t-Butylperneodecanoat und 0,2 Teilen Lauroylperoxid versetzt und 1 Stunde 15 Minuten bei 95 bis 102 °C polymerisiert. Danach wurden 0,5 Teile Ameisensäure und 10 Minuten später 0,7 Teile Hydrochinonmonomethylether zugegeben, der Ansatz wurde abgekühlt und während des Abkühlens mit 217 Teilen Styrol verdünnt. Das Produkt hatte 70% nichtflüchtige Anteile, das Polymerisat hatte gemäss NMR-Spektrum 17% Polyether-Anteile, 14% p-Vinyltoluol-Anteile und eine Säurezahl von 54.

Kautschuk-Pfropfpolymerisat P 2

160 Teile eines Polybutadiens vom Molekulargewicht 300 000 wurden in 1760 Teilen Styrol gelöst. 80 Teile des Präpolymeren 3 und 2 Teile Irganox 1076 (Antioxidans der Fa. Ciba Geigy) wurden zugegeben und die Mischung auf 85 °C erwärmt. Bei dieser Temperatur wurden 2 Teile t-Butylperpivalat während 10 Minuten zugegeben und weitere 50 Minuten gerührt. Anschliessend wurden 2 Teile Ameisensäure und 1,6 Teile Dimethylchinon addiert und der Ansatz auf Raumtemperatur gekühlt.

Man erhält ein Produkt mit einem nichtflüchtigen Anteil von 25,5% und einem K-Wert von 78. Mittels NMR-Spektroskopie wurden für das Polymerisat 31% Polydien-Anteil, 16% Polyether-Anteil und 53% Polystyrol-Anteil bestimmt.

Kautschuk-Pfropfpolymerisat P 3

60 Teile Buna AP 451 (EPDM-Kautschuk der Fa. Bunawerke Hüls AG), 62 Teile eines Polybutadien-öls vom Molekulargewicht 5400 und 0,93 Teile Irganox 1076 wurden in 740 Teilen α-Methylstyrol gelöst und auf 60 °C erwärmt. Anschliessend wurden 61 Teile des Präpolymeren 2 und 0,5 Teile Benzoylperoxid zugegeben, auf 87 °C erwärmt und 50 Minuten bei dieser Temperatur gerührt. 0,5 Teile Ameisensäure und 10 Minuten später 0,2 Teile t-Butylkresol wurden zugegeben und der Ansatz gekühlt. Man erhält ein Produkt mit 27,4% nichtflüchtigen Anteilen und einem K-Wert von 58. Durch NMR-Spektroskopie wurden 49% Polybutadien, 24% Polyether und 27% Poly-α-methylstyrol ermittelt.

Kautschuk-Pfropfpolymerisat P 4

Ein Gemisch aus 140 Teilen Hycar 1300 × 13 (carboxylgruppenterminierter Butadien/Acrylnitril-Kautschuk der Fa. B.F. Goodrich), 14 Teilen Präpolymeres 4, 0,8 Teilen Irganox 1076 als Stabilisator und 50 Teile Styrol wurde auf 60 °C erwärmt, mit 0,5 Teilen Benzoylperoxid versetzt, auf 90 °C erwärmt und 1 h bei dieser Temperatur gehalten. Dann wurden 0,5 Teile Ameisensäure zugegeben, 10 Minuten gerührt, mit 0,2 Teilen t-Butylkresol versetzt und unter Zugabe von Styrol und Abkühlung auf einen Feststoffgehalt von 70% eingestellt. Laut NMR-Spektrum setzt sich das Polymerisat aus 74,1% Kautschuk, 7,4% Polyether und 18,5% Styrol zusammen.

Kautschuk-Pfropfpolymerisat P 5

27 Teile eines Polybutadiens vom Molekulargewicht 300 000, 197 Teile Styrol, 59 Teile α-Methylstyrol, 0,66 Teile Irganox 1076 wurden bei 65 °C gelöst, anschliessend wurden 26 Teile eines Polybutadienöls vom Molekulargewicht 5400 und 25 Teile des Präpolymeren 3 zugegeben, weitere 2 Stunden gerührt, 0,66 Teile t-Butylperneodecanoat hinzugefügt und der Ansatz auf 88 bis 92 °C erwärmt. Nach 1 Stunde Rühren bei dieser Temperatur wurden 0,16 Teile Ameisensäure und nach 10 Minuten 0,25 Teile Tertiärbutylkresol zugegeben und der Ansatz abgekühlt.

Das Produkt hatte einen Feststoff-Anteil von 31%, für den Feststoff wurden 52% Polydien, 25% Polyether und 23% Polystyrol bestimmt.

Kautschuk-Pfropfpolymerisat P 6

32,4 Teile eines Styrol-Butadien-Styrol-Blockpolymerisats vom Molekulargewicht 180 000, 75,6 Teile Styrol und 10,8 Teile des Präpolymeren 3 wurden mit 0,1 Teilen t-Butylperpivalat während 4 Stunden bei 85 bis 89 °C polymerisiert. Danach wurde, wie bei P 4 beschrieben, abgebrochen. Feststoffgehalt 37%.

Kautschuk-Pfropfpolymerisat P 7

Analog Beispiel P 4 wurden 132 Teile eines Polybutadiens vom Molekulargewicht 300 000, 40 Teile des Präpolymeren 3 und 1148 Teile Styrol während 2,7 Stunden bei 85 bis 88 °C miteinander umgesetzt. Anschliessend wurden 1,65 Teile Ameisensäure und 15 Minuten später 3 Teile Dimethylchinon zugesetzt und im Vakuum 279 Teile Styrol abdestilliert.

Das Produkt hatte einen Festgehalt von 26%, für den Festkörper wurden 50% Polydien, 35% Polystyrol und 15% Polyether bestimmt.

Kautschuk-Pfropfpolymerisat P 8

40 Teile eines medium-cis-Polybutadiens vom Molekulargewicht 300 000 wurden in 348 Teilen Styrol bei 60 °C gelöst. Anschliessend wurden 12 Teile des Präpolymeren 3, 0,4 Teile Irganox 1076, und 0,4 Teile einer 50%igen Lösung von t-Butylperoctoat in Benzin zugegeben und 45 Minuten bei 90 bis 96 °C polymerisiert. Anschliessend wurden 0,5 Teile Ameisensäure und 10 Minuten später 0,3 Teile Dimethylchinon zugegeben und der Ansatz wurde abgekühlt.

Das Produkt hatte einen Feststoffgehalt von 26%, der Rückstand wies einen Polystyrol-Anteil von 51% und einen Polyetheranteil von 11% auf.

Vergleichsversuch P 9

Ein Pfropfpolymerisat analog Pfropfpolymerisat P 6 wurde hergestellt, jedoch ohne das Präpolymere 3; mit nur 908 Teilen Styrol während 4,5 Stunden Polymerisationszeit. Eine Destillation wurde nicht durchgeführt. Der Festgehalt betrug 28%, der Polydien-Anteil am Festprodukt 46%, der Polystyrol-Anteil 54%.

Beispiel 1

130 Teile einer fünflagigen Glasfasermatte wurden mit 165 Teilen Bindemittel (gemäss Tabelle 1) und 165 Teilen Kreide als Füllstoff getränkt. Das Bindemittel enthielt 1,5% tert.-Butylperbenzoat als Initiator. Das Laminat wurde zwischen Polyesterfolien in einer Stahlform zu 4 mm dicken Platten (16 × 16 cm) verpresst und bei 140 °C und 200 bar 20 min lang ausgehärtet.

Zur Beurteilung der Rissanfälligkeit der Formstoffe wurden Prüfkörper (8 × 8 cm) zwischen zwei Metallringen (lichte Weite 6 cm) eingespannt und darauf aus 50 cm Höhe eine Stahlkugel (761 g, Durchmesser 5,7 cm) fallen gelassen. Die Unterseite des Prüfkörpers wurde mit einer roten Farbstofflösung eingesprüht, nach 5 min mit Wasser abgewaschen und getrocknet. Die Schädigungszone (roter, kreisförmiger Kern) wurde zur Beurteilung der Rissanfälligkeit mitten durchgeschnitten und die Eindringtiefe des Farbstoffs mit Hilfe einer Messlupe ermittelt. Je grösser die Eindringtiefe, desto schlagempfindlicher und spröder ist der Formstoff.

Die Ergebnisse in Tabelle 1 zeigen, dass die Eindringtiefe bei den erfindungsgemäss modifizierten Formteilen (Versuche b, c und d) deutlich geringer ist als bei Einsatz des Harzes H1 allein.

Tabelle 1

| Versuch | UP-Harz H1 Teile | Kautschuke Art | Teile | Eindringtiefe mm |
|---|---|---|---|---|
| a | 165 | – | | 3,9 |
| b* | 100 | P 5 | 65 | 1,6 |
| c | 100 | P 6 | 65 | 2,4 |
| d | 100 | P 7 | 65 | 2,0 |

* Das Bindemittel enthielt zusätzlich 16 Teile einer 33%igen Lösung von Polyvinylacetat (säuremodifiziert, Säurezahl 7) in Styrol als Niederschrumpfkomponente.

Beispiel 2

Zur Prüfung der Emulgierfähigkeit wurden je 40 Teile Kautschuklösung mit je 60 Teilen UP-Harz H1 bzw. H2 intensiv vermischt, und die Stabilität der Emulsion wurde beobachtet. Die Ergebnisse in Tabelle 2 zeigen, dass die erfindungsgemässen Emulsionen im Beobachtungszeitraum während einer Woche stabil sind, während die Emulsion mit der Kautschuklösung P 9 (Vergleichsversuch, bei dem das Pfropfpolymerisat nicht mit der Komponente B modifiziert war) innerhalb von 1 Tag in zwei Phasen zerfällt.

Tabelle 2

| Kautschuk | UP-Harz | Emulsionsstabilität |
|---|---|---|
| P 5 | H1 | 1 Woche |
| P 5 | H2 | 1 Woche |
| P 8 | H1 | 1 Woche |
| P 8 | H2 | 1 Woche |
| P 9 | H1 | 24 Stunden |
| P 9 | H2 | 24 Stunden |

Beispiel 3

Die Harze H3 bis H5 wurden mit den Kautschuk-Pfropfpolymerisate P 1 bis P 3 und Styrol in folgender Zusammensetzung gemischt:
60 Teile Harz H
15 Teile Pfropfpolymerisat P
40 Teile Styrol.

Zum Vergleich wurden Mischungen aus
60 Teilen Harz H
40 Teilen Styrol
hergestellt.

100 Teile der genannten Mischungen wurde mit 100 Teilen Calciumcarbonat, 2 Teilen Benzoylperoxid und – im Falle der eindickfähigen Harze H2 und H3 – 2,5 Teile Magnesiumoxid gemischt. Mit dieser Formulierung wurden Glasmatten getränkt (5 Matten, um auf einen Glasgehalt im Formstoff von 35% zu kommen) und sofort – bzw. nach 3 Tagen Eindickung bei Raumtemperatur – bei 120 °C verpresst und gehärtet. Die Schlagzähigkeit der Probeplatten wurde gemessen, indem die freie Fallhöhe einer Stahlkugel (Gewicht 761 g, Durchmesser 5,7 cm) gemessen wurde, bei der erstmals eine deutliche Rissbildung eintritt. Ergebnisse s. Tabelle 3.

Tabelle 3

| Mischung | Fallhöhe in cm |
|---|---|
| H3/St | 20 |
| H4/St | 15 |
| H5/St | 15 |
| H3/P 1/St | 65 |
| H3/P 2/St | 55 |
| H3/P 3/St | 60 |
| H3/P 4/St | 50 |
| H4/P 1/St | 45 |
| H4/P 2/St | 40 |
| H4/P 3/St | 45 |
| H4/P 4/St | 35 |
| H5/P 1/St | 50 |
| H5/P 2/St | 50 |
| H5/P 3/St | 45 |
| H5/P 4/St | 40 |

**Patentanspruch**

Härtbare Polyesterformmassen, enthaltend ein Gemisch aus

I. einem ethylenisch ungesättigten Polyester oder einem endständig ungesättigten Vinylesterharz,

II. ethylenisch ungesättigten mit I copolymerisierbaren Monomeren,

III. 6 bis 25 Gew.%, bezogen auf I + II, eines Pfropfpolymerisats P, bei welchem auf
A. 5 bis 95 Gew.% eines kautschukartigen Polymerisats mit einer Glastemperatur unter 0 °C
B. 95 bis 5 Gew.% eines olefinische Doppelbindungen enthaltenden Polyaddukts, Polykondensats oder Acrylpolymerisats, welches ein Molekulargewicht von 1000 bis 100 000 hat und eine Glastemperatur über 0 °C aufweist, sowie gegebenenfalls
C. 0 bis 90 Gew.% Vinylmonomere
gepfropft sind, wobei sich die Prozentzahlen zu 100 addieren,

IV. 5 bis 300 Gew.%, bezogen auf I + II, faserförmiger Verstärkungsmittel, sowie gegebenenfalls

V. üblichen Initiatoren, Polymerisationsbeschleunigern, Inhibitoren, Gleitmitteln, inerten Lösungsmitteln, Füllstoffen, Verdikkungsmitteln und schrumpfmindernden Zusätzen.

## Claim

A hardenable polyester molding material which contains a mixture of

I. an ethylenically unsaturated polyester or a terminally unsaturated vinyl ester resin, II. ethylenically unsaturated monomers copolymerizable with I,

III. from 6 to 25% by weight, based on I + II, of a graff polymer P, in which there are grafted on

   A. from 5 to 95% by weight of an elastomeric polymer having a glass transition temperature of below 0 °C,

   B. from 95 to 5% by weight of a polyadduct, polycondensate or acrylic polymer which contains olefinic double bonds and has a molecular weight of from 1000 to 100,000 and a glass transition temperature of above 0 °C, with or without

   C. from 0 to 90% by weight of vinyl monomers,

   the percentages totalling 100, and

IV. from 5 to 300% by weight, based on I + II, of fibrous reinforcing agents, with or without V. conventional initiators, polymerization accelerators, inhibitors, lubricants, inert solvents, fillers, thickeners and shrinkage-reducing additives.

## Revendication

Masses à mouler durcissables à base de polyester, contenant un mélange de

I. un polyester insaturé éthyléniquement ou une résine non saturée en fin de chaîne II. des monomères insaturés éthyléniquement copolymérisables avec I

III. 6 à 25% en poids, rapportés à I + II, d'un polymérisat greffé P, dans lequel sont greffés sur

   A. 5 à 95% en poids d'un polymérisat caoutchouteux d'une température de transition vitesse inférieure à 0 °C

   B. 95 à 5% en poids d'un polyadduct, polycondensat ou polymérisat acrylique contenant une double liaison oléfinique, qui a un poids moléculaire de 1000 à 100 000 et présente une température de transition vitesse supérieure à 0 °C, ainsi qu'éventuellement

   C. 0 à 90% en poids de monomères vinyliques,

   l'addition des pourcentages donnant 100.

IV. 5 à 300% en poids, rapportés à I + II d'agents de renforcement fibreux, ainsi qu'éventuellement

V. des initiateurs, accélérateurs de polymérisation, inhibiteurs, agents de démoulage, solvants inertes, charges, épaississeurs et additifs diminuant le retrait, usuels.